# EUROPEAN PATENT APPLICATION

(11) **EP 4 149 206 A1**
(43) Date of publication of application: **15.03.2023**
(21) Application number: 22190611.8
(22) Date of filing: 16.08.2022
(51) Int. Cl.: H05B 3/14, H05B 3/58

(54) **CARBON NANO TUBE (CNT) CONDUIT HEATER**

(30) Priority: 10.09.2021 US 202117471425
(71) Applicant: Goodrich Corporation, Charlotte, NC 28217-4578 (US)
(72) Inventor: CHING, Nathaniel, Hartville, OH (US); HU, Jin, Hudson, OH (US); BOTURA, Galdemir Cezar, Akron, OH (US)
(74) Representative: Dehns

(57) **Abstract**

A carbon nano tube (CNT) conduit heater system includes a CNT sheet (49) having a first surface and a second surface. A first busbar (84) is electrically coupled to the CNT sheet (49). A second busbar (86) is electrically coupled to the CNT sheet (49). The second busbar (86) is arranged substantially parallel to the first busbar (84). A first protective layer (44) is disposed on the first surface and a second protective layer (46) is disposed on the second surface, wherein the second protective layer (46) is joined to the first protective layer (44) encapsulating the CNT sheet (49) the first busbar (84) and the second busbar (86) forming a heater assembly having a first side and a second side.

## Description

### BACKGROUND

Exemplary embodiments pertain to the art of heater systems and, more particularly, to a carbon nano tube (CNT) heater for conduits.

Conduits, e.g., tubing, hoses, and the like that transport water or other liquids in freezing temperatures are subject to blockage due to ice formation. Thus, in freezing environments a heater(s) may be wrapped about the conduit. The heater(s) often takes the form of an electrical resistive heating element that, when activated, warms the conduit by Joule heating. The electric resistive heater(s) include metal resistance wire or foil that is encapsulated in silicone sheets. In certain environments, such as vibratory environments, the metal resistance wires are subject to fatigue and which may lead to damage.

### BRIEF DESCRIPTION

Disclosed is a carbon nano tube (CNT) conduit heater system configured and disposed to be arranged on an outer surface of a conduit. The heater system includes a carbon nano tube (CNT) sheet having a first edge, a second edge opposite the first edge, a third edge extending between the first edge and the second edge, and a fourth edge extending between the first edge and the second edge spaced from the third edge. The first edge and the second edge includes a first dimension, and the third edge and the fourth edge include a second dimension that is less than the first dimension. The CNT sheet including a first surface and a second surface. A first busbar is electrically coupled to the CNT sheet. The first busbar extends parallel to one of the first edge, the second edge, the third edge, and the fourth edge. A second busbar is electrically coupled to the CNT sheet. The second busbar is arranged substantially parallel to the first busbar and extends parallel to another of the first edge, the second edge, the third edge, and the fourth edge. A first protective layer is disposed on the first surface and a second protective layer is disposed on the second surface, wherein the second protective layer is joined to the first protective layer encapsulating the CNT sheet the first busbar and the second busbar forming a heater assembly having a first side extending along the first edge and a second side extending along the second edge.

Additionally, or alternatively, in this or other non-limiting examples, the first busbar extends along the first edge and the second busbar extends along the second edge, the heater assembly being helically wrapped about the outer surface of the conduit.

Additionally, or alternatively, in this or other non-limiting examples, the first busbar extends along the first edge and the second busbar extends along the second edge, the heater assembly being wrapped entirely about the outer surface of the conduit with the first side overlapping the second side.

Additionally, or alternatively, in this or other non-limiting examples, a fastener configured to join the first side and the second side.

Additionally, or alternatively, in this or other non-limiting examples, the fastener comprises a hook and loop fastening system.

Additionally, or alternatively, in this or other non-limiting examples, the first busbar extends along the third edge and the second busbar extends along the fourth edge, the heater assembly being wrapped about the outer surface of the conduit with the first side being spaced from the second side.

Additionally, or alternatively, in this or other non-limiting examples, the first busbar extends along the third edge and the second busbar extends along the fourth edge, the heater assembly being wrapped about the outer surface of the conduit with the first side being joined to the second side forming a heater tube.

Additionally, or alternatively, in this or other non-limiting examples, the heater assembly is wrapped about the outer surface of the conduit with the first side being joined to the second side forming a heater tube, the first busbar extending parallel to the first edge and the second busbar extending parallel to the second edge and being spaced from the first busbar. Additionally, or alternatively, in this or other non-limiting examples, wherein the first busbar is circumferentially spaced from the second busbar between about 30° and about 180°.

Additionally, or alternatively, in this or other non-limiting examples, the heater assembly is adhesively bonded to the outer surface of the conduit.

Also disclosed is an aircraft including a fuselage supporting a first wing, a second wing, a tail and a stabilizer supported at the tail. A conduit supported in the fuselage. The conduit includes an outer surface and an inner surface. A heater system is disposed about the outer surface of the conduit. The heater system includes a carbon nano tube (CNT) sheet having a first edge, a second edge opposite the first edge, a third edge extending between the first edge and the second edge, and a fourth edge extending between the first edge and the second edge spaced from the third edge. The first edge and the second edge includes a first dimension, and the third edge and the fourth edge include a second dimension that is less than the first dimension. The CNT sheet including a first surface and a second surface. A first busbar is electrically coupled to the CNT sheet. The first busbar extends parallel to one of the first edge, the second edge, the third edge, and the fourth edge. A second busbar is electrically coupled to the CNT sheet. The second busbar is arranged substantially parallel to the first busbar and extends parallel to another of the first edge, the second edge, the third edge, and the fourth edge. A first protective layer is disposed on the first surface and a second protective layer is disposed on the second surface, wherein the second protective layer is joined to the first protective layer encapsulating the CNT sheet the first busbar and the second busbar forming a heater assembly having a first side extending along the first edge and a second side extending along the second edge. 12. The CNT conduit heater system according to claim 11, wherein the first busbar extends along the first edge and the second busbar extends along the second edge, the heater assembly being helically wrapped about the outer surface of the conduit.

Additionally, or alternatively, in this or other non-limiting examples, the first busbar extends along the first edge and the second busbar extends along the second edge, the heater assembly being wrapped entirely about the outer surface of the conduit with the first edge overlapping the second edge.

Additionally, or alternatively, in this or other non-limiting examples, a fastener configured to join the first edge and the second edge.

Additionally, or alternatively, in this or other non-limiting examples, the fastener comprises a hook and loop fastening system.

Additionally, or alternatively, in this or other non-limiting examples, the first busbar extends along the third edge and the second busbar extends along the fourth edge, the heater assembly being wrapped about the outer surface of the conduit with the first edge being spaced from the second edge.

Additionally, or alternatively, in this or other non-limiting examples, the first busbar extends along the third edge and the second busbar extends along the fourth edge, the heater assembly being wrapped about the outer surface of the conduit with the first edge being joined to the second edge forming a heater tube.

Additionally, or alternatively, in this or other non-limiting examples, heater assembly is wrapped about the outer surface of the conduit with the first edge being joined to the second edge forming a heater tube, the first busbar extending parallel to the first edge and the second busbar extending parallel to the second edge and being spaced from the first busbar.

Additionally, or alternatively, in this or other non-limiting examples, the first busbar is circumferentially spaced from the second busbar between about 30° and about 180°.

Additionally, or alternatively, in this or other non-limiting examples, the conduit comprises one of a pitot tube, a water conduit, and a waste water conduit.

### BRIEF DESCRIPTION OF THE DRAWINGS

The following descriptions should not be considered limiting in any way. With reference to the accompanying drawings, like elements are numbered alike:
FIG. 1 depicts an aircraft including a carbon nano-tube (CNT) conduit heater, in accordance with a non-limiting example;
FIG. 2 depicts a cross-sectional axial end view of the CNT conduit heater disposed on a conduit, in accordance with a non-limiting example;
FIG. 3 depicts a view of the CNT conduit heater, in accordance with a non-limiting example;
FIG. 4 depicts the CNT conduit heater helically wrapped about a conduit, in accordance with a non-limiting example;
FIG. 5 depicts the CNT conduit heater in accordance with a non-limiting example wrapped about a conduit;
FIG. 6 depicts the CNT conduit heater in accordance with another non-limiting example wrapped about a conduit;
FIG. 7 depicts an axial end view of a CNT conduit heater in accordance with yet another non-limiting example wrapped about a conduit;
FIG. 8 depicts the CNT conduit heater in accordance with yet still another non-limiting example wrapped about a conduit;
FIG. 9 depicts the CNT conduit heater in accordance with still another non-limiting example wrapped about a conduit; and
FIG. 10 depicts the CNT conduit heater in accordance with still yet another non-limiting example.

### DETAILED DESCRIPTION

A detailed description of one or more embodiments of the disclosed apparatus and method are presented herein by way of exemplification and not limitation with reference to the Figures.

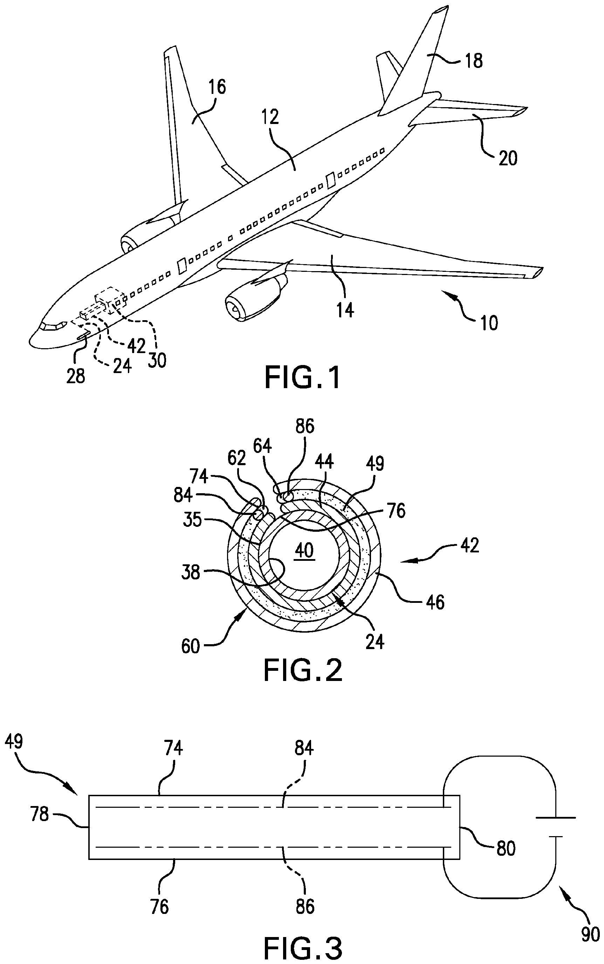

An aircraft, in accordance with a non-limiting example, is indicated generally at 10 in FIG. 1. Aircraft 10 includes a fuselage 12 that supports a first wing 14, a second wing 16, and a tail 18. Tail 18 may support a stabilizer 20. A conduit 24 extends through fuselage 12 and connects a pitot tube 28 to sensors 30. Referring to FIG. 2, and with continued reference to FIG. 1, conduit 24 includes an outer surface 35 and an inner surface 38 that defines a passage 40. In order to prevent ice build up in passage 40, conduit 24 is provided with a heater system 42. At this point, it should be understood that while described in terms of an aircraft mounted conduit, heater system 42 may be employed in a wide variety of applications where heating a conduit is desired. Further, it should be understood that the term "conduit" encompasses, tubes, hoses, and the like. Tubes and hoses may be formed from a rigid material or a flexible material.

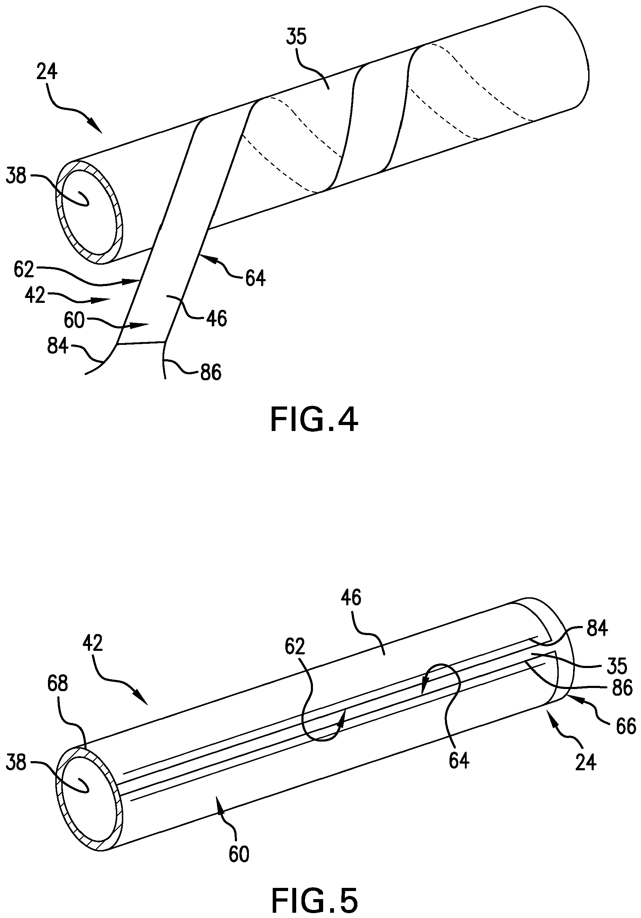

Heater system 42 includes a first protective layer 44, a second protective layer 46, and a carbon nano-tube (CNT) sheet layer 49 arranged therebetween. That is, CNT sheet layer 49 is sandwiched between first protective layer 44 and second protective layer 46. It should be understood that CNT sheet layer 49 may be formed from one or more layers of CNT material. CNT sheet layer 49 may include binders to enhance robustness. In a non-limiting example, first protective layer 44 may be bonded, about its periphery, to second protective layer 46 forming a flexible heater assembly 60. In accordance with a non-limiting example, heater assembly 60 includes a first side 62 and a second side 64. Heater assembly 60 also includes a first axial end 66 and an opposing second axial end 68 as shown in FIG. 5.

In a non-limiting example, first protective layer 44 and second protective layer 46 are formed from flexible materials such as elastomers including silicone, fluorocarbon, neoprene, and the like. First protective layer 44 and second protective layer 46 may also be formed from plastics such as polyetheretherketone (PEEK), polyethylene, naphtlalate, or polyimide. In accordance with further non-limiting example, first protective layer 44 and/or second protective layer 46 may include fillers such as zinc oxide or boron nitride to enhance thermal conductivity or dielectric resistance. In accordance with further non-limiting example, first protective layer 44 and/or second protective layer 46 may include a woven fabric or nondirectional mat formed from fiberglass, aramid, or para-aramid to provide abrasion and tear resistance. In accordance with still further non-limiting examples, first protective layer 44 and/or second protective layer 46 may be made from multiple layers to achieve a desired balance of flexibility and protection. Still further, an outer layer of heater assembly 60 may include a layer of foam to provide thermal insulation.

In further accordance with a non-limiting example, CNT sheet layer 49 includes a first edge 74, a second edge 76, a third edge 78 and a fourth edge 80 that surround a first substantially planar surface (not separately labeled) and an opposing second substantially planar surface (also not separately labeled) as shown in FIG. 3. First edge 74 is substantially parallel to second edge 76. Likewise, third edge 78 is substantially parallel to fourth edge 80. In a non-limiting example, first edge 74 runs along first side 62 and second edge 76 runs along second side 64 of heater assembly 60. Third edge 78 runs along axial end 66 and fourth edge 80 runs along second axial end 68 of heater assembly 60. First edge 74 and second edge 76 include a first dimension and third edge 78 and fourth edge 80 include a second dimension that is less than the first dimension. In a non-limiting example, third edge 78 and fourth edge 80 may be substantially equal to, or less than a circumference of conduit 24. In one non-limiting example, a first busbar 84 extends along first edge 74 and a second busbar 86 extends along second edge 76. First busbar 84 and second busbar 86 are connected to a power source 90. As will be understood herein, first busbar 84 may extend along third edge 78 and second busbar 86 may extend along fourth edge 80 in accordance with other non-limiting examples.

In a non-limiting example, CNT sheet layer 49 may take the form of a nonaligned sheet of CNT material with first busbar 84 and second busbar 86 being disposed between layers of insulation (not shown). In a non-limiting example, electrical current passing into first busbar 84 passes through CNT sheet layer 49 to second busbar 86 to develop heat that may be applied to outer surface 35. To achieve a desired flexibility, first busbar 84 and second busbar 86 may be made from metal such as copper or silver, or be formed from an electrically conductive non-metal such as carbon fibers or CNT yarn. Busbars 84 and 86 are adhesively bonded to CNT sheet layer 49 to ensure electrical continuity.

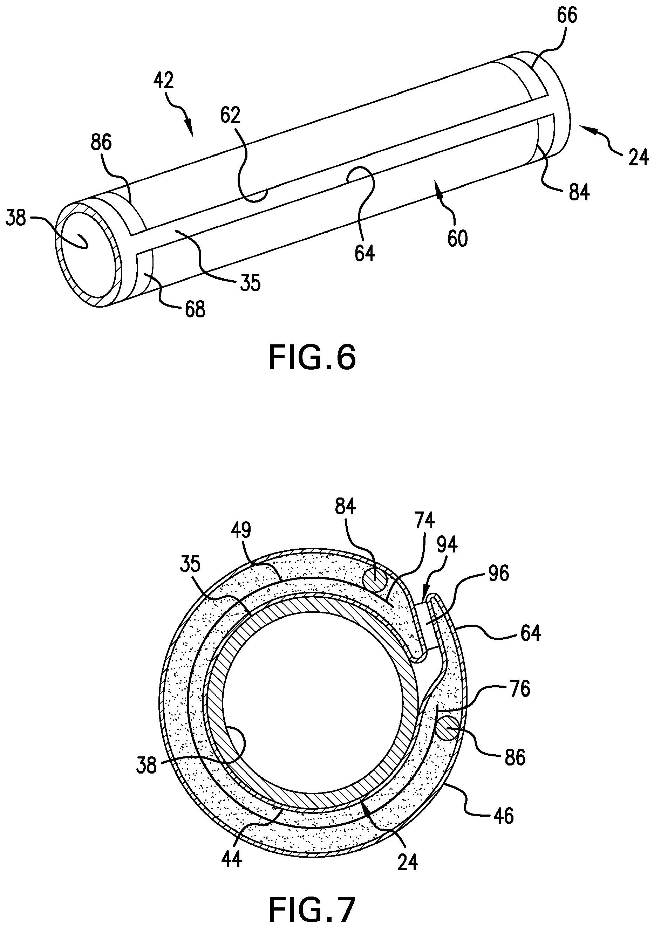

In a non-limiting example shown in FIG. 4, heater assembly 60 is helically wound about outer surface 35 of conduit 24. In this arrangement, gaps are created between first side 62 and second side 64. In a non-limiting example, heater assembly 60 may be adhesively joined to outer surface 35. In another non-limiting example depicted in FIG. 5, heater assembly 60 is wrapped about outer surface 35 of conduit 24 such that first side 62 is spaced from and parallel to second side 64. In addition, first busbar 84 and second busbar 86 extend along a longitudinal axis of conduit 24. In still yet another non-limiting example depicted in FIG. 6, heater assembly 60 is wrapped about outer surface 35 of conduit 24 such that first side 62 is spaced from and parallel to second side 64. In addition, first busbar 84 and second busbar 86 extend circumferentially about outer surface 35 and are arranged at third edge 78 and fourth edge 80 respectively.

In FIG. 7, heater assembly 60 is wrapped about conduit 24 such that second side 64 overlaps first side 62 in accordance with still yet another non-limiting example. In the non-limiting example shown, a fastener 94, shown in the form of a hook and loop fastening system 96 connects second side 64 to first side 62. The use of fastener 94 removes the need for adhesives or other external means of connecting heater assembly 60 to conduit 24 such as wire ties, straps, and the like.

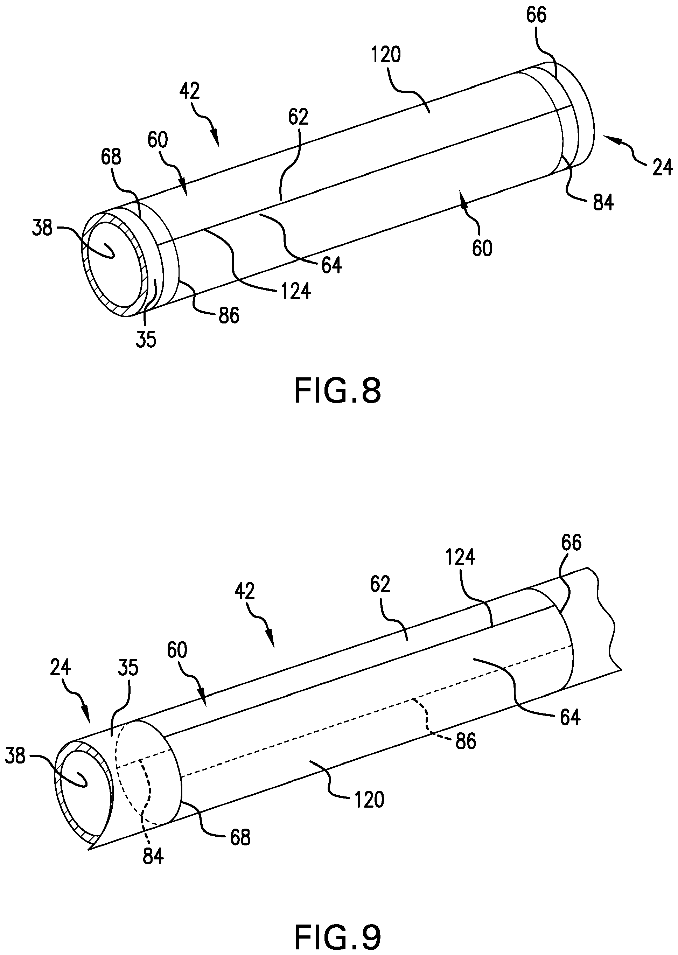

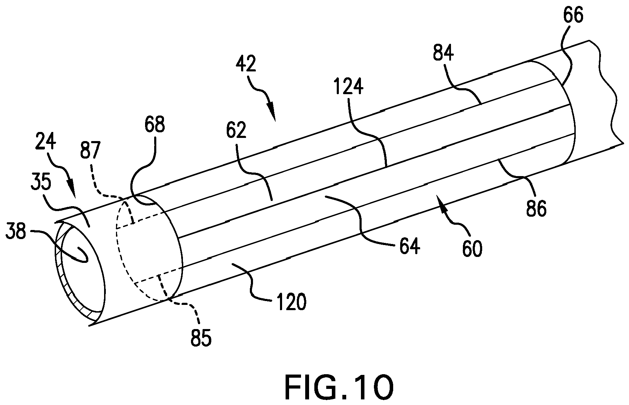

FIGS. 8-10 depict heater assembly 60 in accordance with additional non-limiting examples. In FIGS. 8-10 first side 62 is joined to second side 64 so as to form a heater tube 120. In one non-limiting example, heater tube 120 may include a seam 124 defining a union between first side 62 and second side 64. In another non-limiting example, heater tube 120 may be seamless. In FIG. 8, first busbar 84 extends circumferentially about heater tube 120 at first axial end 66 and second busbar 86 extends circumferentially about heater tube 120 at second axial end 68. In FIG. 9, first busbar 84 runs along a longitudinal axis of heater tube 120 and second busbar also runs along the longitudinal axis of heater tube 120. First busbar 84 is spaced from second busbar 86 by about 180°. In FIG. 10, a pair of first busbars 84 and 85 runs parallel to, and is spaced from a pair of second busbar 86 and 87 by about 90°. Each busbar 84/85 and 86/87 depicted in FIG. 10 is spaced apart from each other by about 180°.

At this point, it should be understood that the heater system in accordance with non-limiting examples includes a heater assembly constructed to be both flexible and energy efficient. Further, the heater assembly is constructed to be readily mountable to an external surface of a conduit. The flexibility of the heater assembly absorbs vibration and impacts so as to prolong an overall operational life. Further, the construction of the heater assembly allows easy mounting and removal to allow for cleaning and/or maintenance. In a non-limiting example, the heater assembly may be deployed in a wide range of configurations. For instance, in one non-limiting example, the heater assembly may be used to condition potable water flowing through a conduit to prevent freezing. The conduit may be provided in an aircraft. In another non-limiting example, the heater assembly may be used to condition grey water and or waste water flowing in a conduit to prevent freezing. That conduit may also be arranged in an aircraft. It should be understood that the heater assembly may be employed in a wide range of applications in which conditioning flow through a conduit is desired.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A carbon nano tube "CNT£ conduit heater system configured and disposed to be arranged on an outer surface of a conduit (24), the heater system comprising:
a carbon nano tube "CNT" sheet (49) including a first edge, a second edge opposite the first edge, a third edge extending between the first edge and the second edge, and a fourth edge extending between the first edge and the second edge spaced from the third edge, the first edge and the second edge including a first dimension, and the third edge and the fourth edge including a second dimension that is less than the first dimension, the CNT sheet (49) including a first surface and a second surface;
a first busbar (84) electrically coupled to the CNT sheet (49), the first busbar (84) extending parallel to one of the first edge, the second edge, the third edge, and the fourth edge;
a second busbar (86) electrically coupled to the CNT sheet (49), the second busbar (86) being arranged substantially parallel to the first busbar (84) and extending parallel to another of the first edge, the second edge, the third edge, and the fourth edge;
a first protective layer (44) disposed on the first surface; and
a second protective layer (46) disposed on the second surface, wherein the second protective layer (46) is joined to the first protective layer (44) encapsulating the CNT sheet (49) and the first busbar (84) and the second busbar (86) forming a heater assembly having a first side extending along the first edge and a second side extending along the second edge.

2. The CNT conduit heater system according to claim 1, wherein the first busbar (84) extends along the first edge and the second busbar (86) extends along the second edge, the heater assembly being helically wrapped about the outer surface of the conduit (24).

3. The CNT conduit heater system according to any preceding claim, wherein the first busbar (84) extends along the first edge and the second busbar (86) extends along the second edge, the heater assembly being wrapped entirely about the outer surface of the conduit with the first side overlapping the second side.

4. The CNT heater system according to claim 3, further comprising: a fastener configured to join the first side and the second side, and optionally wherein the fastener comprises a hook and loop fastening system.

5. The CNT conduit heater system according to any preceding claim, wherein the first busbar (84) extends along the third edge and the second busbar (86) extends along the fourth edge, the heater assembly being wrapped about the outer surface of the conduit (24) with the first side being spaced from the second side.

6. The CNT conduit heater system according to any preceding claim, wherein the first busbar (84) extends along the third edge and the second busbar (86) extends along the fourth edge, the heater assembly being wrapped about the outer surface of the conduit (24) with the first side being joined to the second side forming a heater tube.

7. The CNT conduit heater system according to any preceding claim, wherein the heater assembly is wrapped about the outer surface of the conduit (24) with the first side being joined to the second side forming a heater tube, the first busbar (84) extending parallel to the first edge and the second busbar (86) extending parallel to the second edge and being spaced from the first busbar (84), and optionally wherein the first busbar (84) is circumferentially spaced from the second busbar (86) between about 30° and about 180°.

8. The CNT conduit heater system according to any preceding claim , wherein the heater assembly is adhesively bonded to the outer surface of the conduit (24).

9. An aircraft comprising:
a fuselage (12) supporting a first wing, a second wing, a tail and a stabilizer supported at the tail;
a conduit (24) supported in the fuselage (12), the conduit (24) including an outer surface and an inner surface; and
a heater system disposed about the outer surface of the conduit (24), the heater system comprising:
a carbon nano tube (CNT) sheet (49) including a first edge, a second edge opposite the first edge, a third edge extending between the first edge and the second edge, and a fourth edge extending between the first edge and the second edge spaced from the third edge, the first edge and the second edge including a first dimension, and the third edge and the fourth edge including a second dimension that is less than the first dimension, the CNT sheet (49) including a first surface and a second surface;
a first busbar (84) electrically coupled to the CNT sheet (49), the first busbar (84) extending parallel to one of the first edge, the second edge, the third edge, and the fourth edge;
a second busbar (86) electrically coupled to the CNT sheet (49), the second busbar (86) being arranged substantially parallel to the first busbar (84) and extending parallel to another of the first edge, the second edge, the third edge, and the fourth edge;
a first protective layer (44) disposed on the first surface; and
a second protective layer (46) disposed on the second surface, wherein the second protective layer (46) is joined to the first protective layer (44) encapsulating the CNT sheet (49) and the first and second busbars (84, 86) forming a heater assembly.

10. The CNT conduit heater system according to claim 9, wherein the first busbar (84) extends along the first edge and the second busbar (86) extends along the second edge, the heater assembly being helically wrapped about the outer surface of the conduit (24).

11. The CNT conduit heater system according to claim 9 or 10, wherein the first busbar (84) extends along the first edge and the second busbar (86) extends along the second edge, the heater assembly being wrapped entirely about the outer surface of the conduit (24) with the first edge overlapping the second edge.

12. The CNT heater system according to any of claims 9 to 11, further comprising: a fastener configured to join the first edge and the second edge, and optionally wherein the fastener comprises a hook and loop fastening system.

13. The CNT conduit heater system according to any of claims 9 to 12, wherein the first busbar (84) extends along the third edge and the second busbar (86) extends along the fourth edge, the heater assembly being wrapped about the outer surface of the conduit (24) with the first edge being spaced from the second edge, or wherein the first busbar (84) extends along the third edge and the second busbar (86) extends along the fourth edge, the heater assembly being wrapped about the outer surface of the conduit with the first edge being joined to the second edge forming a heater tube.

14. The CNT conduit heater system according to any of claims 9 to 13, wherein the heater assembly is wrapped about the outer surface of the conduit (24) with the first edge being joined to the second edge forming a heater tube, the first busbar (84) extending parallel to the first edge and the second busbar (86) extending parallel to the second edge and being spaced from the first busbar (84), and optionally wherein the first busbar (84) is circumferentially spaced from the second busbar (86) between about 30° and about 180°.

15. The CNT conduit heater system according to any of claims 9 to 14, wherein the conduit (24) comprises one of a pitot tube, a water conduit, and a waste water conduit.
